# FASCICULE DE BREVET EUROPEEN

(11) **EP 4 182 229 B1**
(45) Date de publication et mention de la délivrance du brevet: **15.04.2026**
(21) Numéro de dépôt: 21742433.2
(22) Date de dépôt: 16.07.2021
(51) Int. Cl.: B64D 11/06, B60N 2/42

(54) **PROCÉDÉ DE FABRICATION D'UNE COQUE DE SÉPARATION DE SIÈGE D'AÉRONEF ET COQUE DE SÉPARATION DE SIÈGE D'AÉRONEF OBTENUE PAR UN TEL PROCÉDÉ**
VERFAHREN ZUR HERSTELLUNG EINER FLUGZEUGSITZ-TRENNWANDSCHALE UND DURCH EIN SOLCHES VERFAHREN ERHALTENE FLUGZEUGSITZ-TRENNWANDSCHALE
METHOD OF MANUFACTURING AN AIRCRAFT SEAT PARTITION SHELL AND AIRCRAFT SEAT PARTITION SHELL OBTAINED BY SUCH A METHOD

(30) Priorité: 17.07.2020 FR 2007492
(43) Date de publication de la demande: 24.05.2023
(73) Titulaire: Airbus Atlantic, 17300 Rochefort (FR)
(72) Inventeur: RODRIGUEZ, Frédéric, 17300 ROCHEFORT (FR)
(74) Mandataire: Santarelli
(86) Numéro de dépôt international: PCT/EP2021/070034
(87) Numéro de publication internationale: WO 2022/013445

(56) Documents cités:
- WO-A1-2006/006930
- WO-A1-92/06003
- FR-A- 1 244 800
- US-A1- 2018 148 176
- US-A1- 2018 222 590
- US-B2- 8 087 612

## Description

### DOMAINE TECHNIQUE

La présente invention appartient au domaine des structures aéronautiques et similaires, notamment des structures primaires pour équipements et fournitures de bord, et concerne plus particulièrement un procédé de fabrication d'une coque de séparation d'un siège d'aéronef, ainsi qu'une coque de séparation obtenue par un tel procédé.

### ÉTAT DE L'ART

Dans un aéronef tel qu'un avion, tout équipement de bord est dimensionné et qualifié pour répondre à des exigences à la fois fonctionnelles, sécuritaires et économiques. Par exemple, cela se traduit pour un siège passager par un compromis essentiellement entre la tenue mécanique et la masse de la structure primaire du siège. D'autres critères comme la tenue au feu sont également pris en compte.

Dans le domaine de l'aviation civile plus particulièrement, des normes et réglementations existent et établissent toute une série de critères que les structures des sièges passagers doivent remplir en vue de leur certification. A titre d'exemple, les structures primaires telles que les coques des sièges passagers doivent présenter une certaine résistance mécanique aux différentes sollicitations en service, notamment les chocs et les vibrations, ainsi que des propriétés ignifuges et de résistance au feu.

A cela s'ajoute la contrainte de masse, essentielle pour les compagnies aériennes car intervient directement dans le coût opérationnel de l'avion.

En règle générale, la majeure partie des structures embarquées (sièges, armoires, etc.) est actuellement constituée de panneaux composites assemblés par des pièces métalliques de liaison. Ces panneaux présentent par exemple une structure sandwich en nid d'abeille, abrégée en Nida, qui renforce leur résistance mécanique et garantit une légèreté maximale.

Les panneaux composites Nida sont complexes à fabriquer, onéreux et présentent un long cycle de fabrication. Leur utilisation impose donc systématiquement de débuter les opérations de définition du siège et d'aménagement de la cabine avion très tôt dans le plan d'action du programme concerné.

Il existe de nombreuses conceptions pour sièges d'aéronefs. Par exemple, le document US2012085863A1 présente un siège de conception complexe dans laquelle la structure est constituée de différents éléments (plaques, poutres et moyens de fixation et de jonction multiformes). D'autres conceptions se caractérisent par une prédominance des éléments plaques et sont plus adaptées à l'absorption d'énergie en cas de chocs, le document US2005145597A1 en donne un exemple.

Dans ces solutions, l'utilisation d'éléments structuraux de type plaque limite fortement la variété des formes possibles. De ce fait, la réalisation de structures coques de formes libres devient rapidement très complexe et sujette aux aléas de l'utilisation des panneaux Nida pour ce genre de réalisations, à savoir la durée et le coût de fabrication.

Néanmoins, le besoin des compagnies aériennes offrant des classes supérieures, telles que la classe affaire ou la première classe, en matière de formes esthétiques, surtout pour les séparateurs d'espaces, reste primordial.

Il n'existe à ce jour aucune alternative viable aux panneaux Nida pour les applications visées.

Le document US2018148176A1 décrit une coque qui enveloppe partiellement un siège et comporte:
- une ossature structurale déterminant un maillage résultant de membrures assemblées, et déterminant une forme d'ensemble, dans l'espace, de la coque;
- un ensemble de panneaux de finition, formant une peau recouvrant l'ossature, les panneaux de finition étant fixés à l'ossature pour former les faces intérieure et extérieure de la coque, et chaque panneau de finition de l'ensemble recouvre au moins une maille du maillage et s'appuie sur toutes ou parties des membrures de la ou des mailles qu'il recouvre.

### PRÉSENTATION DE L'INVENTION

La présente invention vise à pallier les inconvénients de l'art antérieur exposés supra, en particulier à proposer une solution alternative pour réaliser des structures primaires de siège d'aéronef, de formes tridimensionnelles plus ou moins complexes, en assemblant des pièces planes découpées de formes relativement simples.

L'invention vise également à proposer une alternative aux panneaux composites en nid d'abeille, très utilisés en construction aéronautique, dont les coûts sont élevés et les cycles de fabrication longs.

À cet effet, la présente invention a pour objet un procédé de fabrication d'une coque de séparation de siège d'aéronef selon la revendication 1 et une coque de séparation de siège d'aéronef obtenue par un tel procédé, selon la revendication 3.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'une coque de séparation et d'un procédé de fabrication associé conformes aux principes de l'invention.

### BRÈVE DESCRIPTION DES FIGURES

Les figures sont données à titre purement illustratif pour l'intelligence de l'invention et ne limitent pas la portée de celle-ci. Les différents éléments ne sont pas nécessairement représentés à la même échelle. Sur l'ensemble des figures, les éléments identiques ou équivalents portent la même référence numérique.

Il est ainsi illustré en :
- Figure 1 : une vue en perspective d'une structure primaire de siège d'aéronef comprenant une ossature selon un mode de réalisation de l'invention ;
- Figure 2 : une vue en perspective de l'ossature isolée ;
- Figure 3 : une autre vue en perspective de l'ossature ;
- Figure 4 : une vue partielle en perspective de pièces planes longitudinales et transversales assemblées selon l'invention ;
- Figure 5 : une vue partielle de deux pièces planes avant leur assemblage par leurs entures selon l'invention ;
- Figure 6 : une vue partielle d'une pièce transversale à plat montrant des entures d'orientations différentes ;
- Figure 7 : un exemple de pièce plane longitudinale ;
- Figure 8 : un exemple de pièce plane transversale ;
- Figure 9 : un exemple de pièce plane auxiliaire ;
- Figure 10 : une vue partielle éclatée d'une partie de l'ossature montrant des pièces de fixation et d'accroche complémentaires selon l'invention.

### DESCRIPTION DÉTAILLÉE DE MODES DE RÉALISATION

Il convient de noter que certains assemblages et procédés bien connus sont ici décrits pour éviter toute insuffisance ou ambiguïté dans la compréhension de la présente invention.

Dans le mode de réalisation décrit ci-après, on fait référence à une ossature métallique constituée de pièces planes découpées et assemblées, destinée à une coque de séparation de siège passager dans une cabine d'avion. Cet exemple, non limitatif, est donné pour une meilleure compréhension de l'invention et n'exclut pas la fabrication d'une ossature similaire dans un matériau quelconque. Des autres exemples, qui ne font pas partie de la présente invention, concernent des ossatures pour un autre équipement ou fourniture de bord d'aéronef.

Dans la suite de la description, le terme « ossature » désigne un ensemble structural constitué d'un assemblage d'éléments majoritairement longilignes non jointifs.

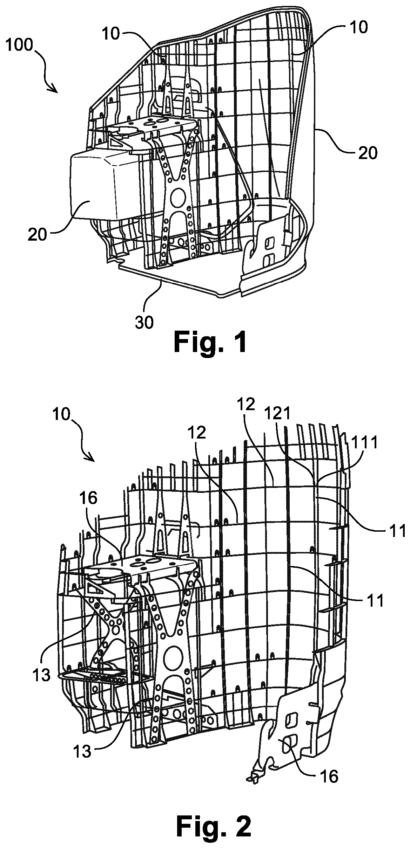

La figure 1 représente partiellement une structure primaire en forme d'une coque de séparation 100 de siège passager d'aéronef comportant principalement une ossature 10 métallique selon l'invention, une coque d'habillage 20 fixée à ladite ossature ainsi que tout autre élément de structure nécessaire à la réalisation du siège tel qu'une embase de fixation 30. La coque d'habillage 20 peut par exemple être thermoformée ou moulée.

Selon l'exemple illustré, la structure primaire en forme de coque de séparation 100 est celle d'un siège passager en cabine « avant », autrement dit de classe supérieure telle que la classe affaires, et présente en cela des volumes adaptés à plus de confort et à une séparation du passager installé du reste de la cabine pour plus d'intimité. Bien entendu, l'invention peut s'appliquer à n'importe quel autre siège d'aéronef ou équipement ayant des formes tridimensionnelles plus ou moins complexes.

La présentation sommaire et partielle faite ci-dessus de la structure primaire du siège permet simplement de définir le cadre d'application de l'invention, dont l'objet principal est la coque de séparation de siège d'aéronef.

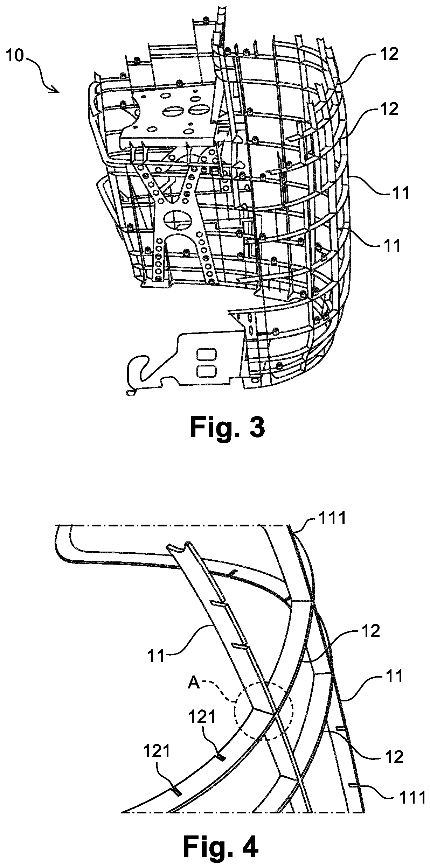

Les figures 2 et 3 représentent de façon isolée l'ossature 10. Selon cet exemple non limitatif, l'ossature 10 présente une forme de coque globalement concave et comporte assemblées entre elles des pièces planes longitudinales 11 et transversales 12 qui ont été préalablement découpées. Les pièces planes 11 et 12 sont conformées pour s'assembler entre elles à des endroits précis de sorte à former l'ossature 10 selon une forme tridimensionnelle définie.

Ainsi, l'ossature 10 reproduit la forme générale de la coque d'habillage 20 grâce aux formes et dimensions des pièces planes 11 et 12 assemblées. Ces formes géométriques et dimensions sont préalablement déterminées sur la base d'un modèle numérique du siège par exemple, comme il sera ultérieurement expliqué.

En référence à la figure 4, chaque pièce longitudinale 11 comporte une pluralité d'entures 111 le long d'un bord de ladite pièce, dans lesquelles viennent s'insérer des pièces transversales 12. Pareillement, chaque pièce transversale 12 est pourvue d'une pluralité d'entures 121 le long d'un bord de ladite pièce de sorte à recevoir des pièces longitudinales 11.

En effet, les pièces longitudinales 11 et transversales 12 s'assemblent par leurs entures 111 et 121 à l'image d'un assemblage mi-bois en T, plus connu dans des constructions navales anciennes de vaisseaux en bois.

Les entures 111 et 121 correspondent à des entailles droites, c'est-à-dire présentant une forme en U.

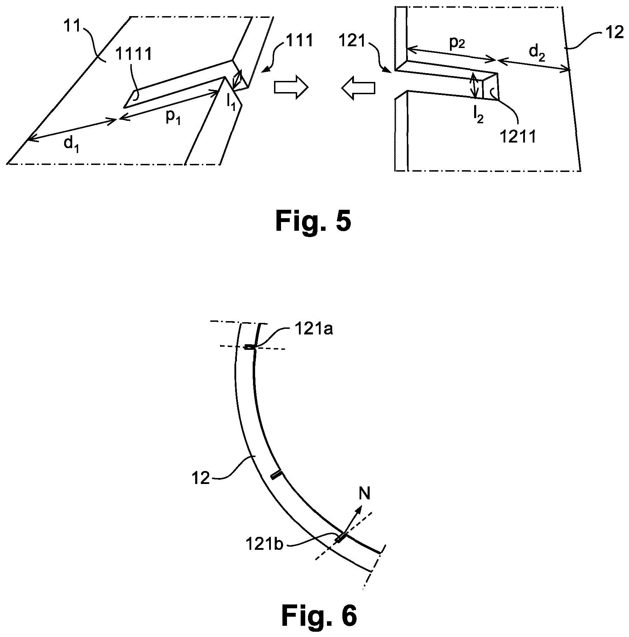

La figure 5 schématise partiellement une pièce longitudinale 11 et une pièce transversale 12 au niveau de leurs entures 111 et 121 avant leur assemblage.

L'enture 111 présente une profondeur p₁ délimitée par un fond 1111 au-delà duquel la pièce 11 présente une largeur résiduelle d₁. De même, l'enture 121, associée à l'enture 111, présente une profondeur p₂ délimitée par un fond 1211 au-delà duquel la pièce 12 présente une largeur résiduelle d₂. Pour obtenir un assemblage conventionnel dans lequel chaque pièce enfourche l'autre pièce sans la dépasser, la profondeur p₁ et la profondeur p₂ sont inférieures ou égales, respectivement, à la largeur résiduelle d₂ et à la largeur résiduelle d₁. De préférence, lorsque les pièces 11 et 12 ont une même largeur au niveau de leurs entures, la profondeur p₁ et la profondeur p₂ sont respectivement égales à la largeur résiduelle d₂ et à la largeur résiduelle d₁, ce qui permet d'obtenir un enfourchement parfait comme montré sur le détail A de la figure 4. Dans ce cas, l'épaisseur de l'ossature 10 formée correspond localement à la largeur des pièces 11 et 12 assemblées. Plus préférablement, la profondeur d'une enture est sensiblement égale à la largeur résiduelle sur la même pièce (p₁ = d₁ et p₂ = d₂), autrement dit, chaque enture s'étend sur une moitié de la largeur locale de la pièce qui la comporte, offrant ainsi une meilleure tenue mécanique. Dans ce dernier cas, les entures sont dites moitié par moitié, c'est-à-dire qu'elles définissent dans le volume des pièces deux parties égales, une partie évidée (l'enture elle-même) et une partie pleine.

En outre, les pièces 11 et 12 peuvent être d'épaisseurs différentes, auquel cas les entures 111 et 121 doivent présenter des largeurs l₁ et l₂ adaptées. Dans l'exemple de la figure 5, la largeur l₁ de l'enture 111 doit être sensiblement égale à l'épaisseur de la pièce 12 au niveau de la zone destinée à être enfourchée par ladite enture. Inversement, l'enture 121 doit être de largeur l₂ sensiblement égale à l'épaisseur locale de la pièce 11. Cette correspondance dimensionnelle permet un emboitement des pièces 11 et 12 avec un jeu fonctionnel minimum, voire un montage par interférence lorsque les largeurs des entures sont sensiblement inférieures aux épaisseurs des pièces.

Les entures 111 et 121 peuvent être orientées différemment le long des pièces 11 et 12.

La figure 6 illustre quelques orientations possibles des entures 121 le long d'une portion de pièce transversale 12. Par exemple, l'enture 121a est normale à la pièce 12 tandis que l'enture 121b est légèrement inclinée par rapport à la normale N de la pièce 12. Les orientations relatives des entures 121 des pièces transversales 12 déterminent les orientations des pièces longitudinales 11 qui y seront montées.

De préférence, seules les entures 121 des pièces transversales 12 peuvent être inclinées par rapport aux normales locales. Les entures 111 des pièces longitudinales 11 sont quant à elles normales de sorte que lesdites pièces longitudinales, ou lisses, soient nécessairement perpendiculaires aux pièces transversales, ou cadres, après assemblage. Plus précisément, les plans moyens des lisses 11 restent perpendiculaires aux plans moyens des cadres 12, quelles que soient leurs orientations, celles-ci étant déterminées en fonction de contraintes liées à la forme finale de l'ossature 10.

Au vu de ce qui précède, on comprend aisément que la présente invention apporte un avantage considérable en permettant d'obtenir une très grande variété de formes simplement grâce à des pièces planes 11 et 12 qu'on vient assembler par des entures 111 et 121 et dont les formes et les dimensions ont été préalablement déterminées.

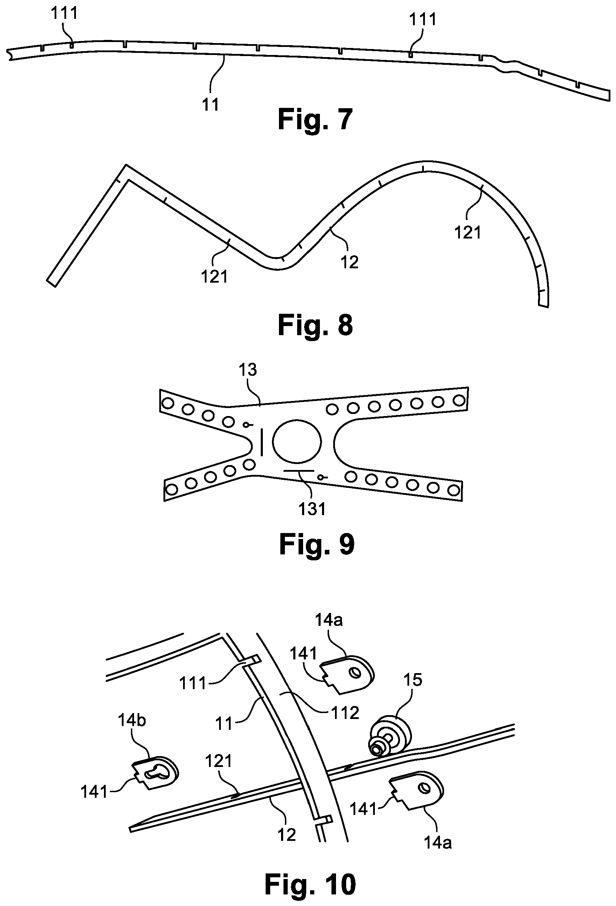

Des exemples de pièce longitudinale 11 et de pièce transversale 12 de l'ossature sont donnés en figures 7 et 8.

En outre, l'ossature 10 peut comporter toute autre pièce auxiliaire 13 plane pour répondre à certaines problématiques fonctionnelles et/ou structurales. La figure 9 représente un exemple de pièce auxiliaire 13 comportant une rainure 131 par laquelle ladite pièce se fixe au reste de l'ossature, au moyen d'un assemblage tenon mortaise par exemple, le tenon étant par exemple ménagé sur une pièce longitudinale 11 ou transversale 12.

L'ossature 10 peut également comporter des pièces planes d'accroche et de fixation 14a et 14b ainsi que des moyens de liaison 15 comme représenté sur la figure 10. Les pièces d'accroche et de fixation 14a et 14b se fixent aux pièces longitudinales 11 et/ou transversales 12 au moyen de tenons 141 qui viennent se loger dans des mortaises 112 prévues à cet effet sur lesdites pièces longitudinales et/ou transversales.

Accessoirement, l'ossature 10 peut comporter des pièces quasi planes 16, indiquées sur la figure 2, présentant quelques reliefs obtenus par un procédé de formage ou de pliage de tôles.

Ainsi, l'ossature selon les concepts de la présente invention offre une grande modularité et permet d'obtenir des formes 3D complexes en partant de pièces 2D élémentaires définies et préparées préalablement.

L'ossature 10 peut être fabriquée par un procédé comprenant :
- une étape de définition des pièces longitudinales 11 et transversales 12 en fonction d'une forme de la structure primaire ;
- une étape de découpe des pièces définies dans des plaques planes.
- une étape d'assemblage des pièces découpées par leurs entures pour reconstituer la forme de la structure primaire ; et
- une étape de fixation rigide de l'assemblage obtenu.

L'étape de définition des pièces longitudinales 11 et transversales 12 constitutives de l'ossature 10 consiste à déterminer les formes et les dimensions desdites pièces ainsi que leur nombre et répartition dans l'ossature. A cet effet, un modèle de la structure primaire 100 à laquelle l'ossature est destinée peut être utilisé. Ainsi, il est par exemple possible de définir les pièces 11 et 12 à partir de sections longitudinales et transversales pratiquées dans le modèle CAO (Conception Assistée par Ordinateur) de la structure primaire.

Les autres pièces planes de l'ossature 10, à savoir les pièces auxiliaires 13 de formes quelconques et les pièces d'accroche et de fixation 14a et 14b, peuvent être définies de la même manière.

L'étape de découpe des pièces, y compris des pièces complémentaires, peut être réalisée par toute technique de découpe utilisée en fabrication mécanique telle que la découpe laser ou la découpe au jet d'eau en fonction du matériau utilisé. Il convient de noter qu'il est préférable de procéder par une découpe laser au vu des performances, en termes d'efficacité et de précision, obtenues par cette technique, et ce sur différents matériaux (métal, plastique, etc.).

L'étape d'assemblage des pièces de l'ossature 10 se déroule suivant les opérations de jonctionnement par les entures expliquées ci-avant.

Enfin, l'assemblage obtenu est fixé rigidement par soudage, collage, clipsage ou par tout autre moyen conventionnel de la fabrication mécanique.

Il convient de noter que le fait de réaliser une ossature à partir de pièces indépendantes simples facilité grandement la maintenance et la réparation du siège d'aéronef, et en limite considérablement le coût. En effet, il suffit de remplacer certaines pièces longitudinales ou transversales défaillantes, contrairement à une structure composite d'un seul tenant dans laquelle les dommages peuvent être problématiques et nécessiter le remplacement de toute la structure.

## Revendications

1. Procédé de fabrication d'une coque de séparation (100) de siège d'aéronef,
ladite coque comprenant une ossature (10) et une coque d'habillage (20) enveloppant ladite ossature, ladite ossature comprenant des pièces longitudinales (11) et des pièces transversales (12) espacées et assemblées entre elles, lesdites pièces présentant des formes et des dimensions variées de sorte à reproduire une forme générale tridimensionnelle de la coque de séparation, les pièces longitudinales et transversales étant planes et comportant chacune au moins une enture (111, 121), ledit procédé étant **caractérisé en ce qu'**il comprend :
- une étape de définition des pièces longitudinales (11) et transversales (12) en fonction d'une forme de la coque de séparation (100) ;
- une étape de découpe desdites pièces définies dans des plaques planes ;
- une étape d'assemblage des pièces découpées par leurs entures (111, 121) pour reconstituer la forme de la coque de séparation;
et
- une étape de fixation de ladite coque d'habillage (20) à ladite ossature (10).

2. Procédé selon la revendication 1, comprenant en outre une étape de fixation rigide de l'assemblage obtenu par soudage, collage, clipsage ou tout autre technique conventionnelle.

3. Coque de séparation (100) de siège d'aéronef, comprenant une ossature (10) et une coque d'habillage (20) enveloppant ladite ossature, **caractérisée en ce qu'**elle est obtenue par un procédé de fabrication selon la revendication 1 ou la revendication 2.

4. Coque de séparation selon la revendication 3, dans laquelle chaque pièce longitudinale (11) est pourvue d'une pluralité d'entures (111) distribuées le long d'un bord de ladite pièce, chacune desdites entures coopérant avec une enture (121) d'une pièce transversale (12), et dans laquelle chaque pièce transversale (12) est pourvue d'une pluralité d'entures (121) distribuées le long d'un bord de ladite pièce, chacune desdites entures coopérant avec une enture (111) d'une pièce longitudinale (11).

5. Coque de séparation selon la revendication 3 ou la revendication 4, dans laquelle les plans moyens des pièces transversales (12) sont sensiblement parallèles et les plans moyens des pièces longitudinales (11) sont sensiblement perpendiculaires aux plans moyens desdites pièces transversales.

6. Coque de séparation selon l'une quelconque des revendications 3 à 5, dans laquelle chaque enture (111, 121) présente une profondeur sensiblement égale à la moitié d'une largeur locale de la pièce (11, 12) comportant ladite enture.

7. Coque de séparation selon l'une quelconque des revendications 3 à 6, dans laquelle chaque assemblage entre une pièce longitudinale (11) et une pièce transversale (12) est de type mi-bois en T.

8. Coque de séparation selon l'une quelconque des revendications 3 à 7, dans laquelle les pièces longitudinales (11) et transversales (12) sont des éléments plaques.

9. Coque de séparation selon l'une quelconque des revendications 3 à 8, dans laquelle l'ossature (10) comporte en outre des pièces planes auxiliaires (13) de formes quelconques ainsi que des pièces planes d'accroche et de fixation (14a, 14b).

10. Coque de séparation selon la revendication 9, dans laquelle les pièces auxiliaires (13) et les pièces d'accroche et de fixation (14a, 14b) sont fixées au reste de l'ossature (10) par des moyens tels que des tenons (141) et des mortaises (112, 131).

11. Coque de séparation selon l'une quelconque des revendications 3 à 10, dans laquelle les pièces longitudinales (11) et transversales (12) sont métalliques.

## Patentansprüche

1. Verfahren zur Fertigung einer Flugzeugsitztrennschale (100),
wobei die Schale ein Gerüst (10) und eine Verkleidungsschale (20) umfasst, die das Gerüst umhüllt, wobei das Gerüst Längsteile (11) und Querteile (12) umfasst, die dazwischen beabstandet und zusammengefügt sind, wobei die Teile unterschiedliche Formen und Abmessungen beinhalten, um eine allgemeine dreidimensionale Form der Trennschale nachzubilden, wobei die Längs- und Querteile flach sind und jeweils mindestens eine Spalte (111, 121) aufweisen, wobei das Verfahren **dadurch gekennzeichnet ist, dass** es Folgendes umfasst:
- einen Schritt des Definierens der Längs- (11) und Querteile (12) in Abhängigkeit von einer Form der Trennschale (100);
- einen Schritt des Schneidens der in flachen Platten definierten Teile;
- einen Schritt des Zusammenfügens der an ihren Spalten (111, 121) geschnittenen Teile, um die Form der Trennschale wiederherzustellen; und
- einen Schritt des Befestigens der Verkleidungsschale (20) an dem Gerüst (10).

2. Verfahren nach Anspruch 1, ferner umfassend einen Schritt des starren Befestigens der durch Schweißen, Kleben, Clipsen oder jede andere konventionelle Technik erhaltenen Verbindung.

3. Flugzeugsitztrennschale (100), umfassend ein Gerüst (10) und eine Verkleidungsschale (20), die das Gerüst umhüllt, **dadurch gekennzeichnet, dass** sie durch ein Fertigungsverfahren nach Anspruch 1 oder Anspruch 2 erhalten wird.

4. Trennschale nach Anspruch 3, wobei jedes Längsteil (11) mit einer Vielzahl von entlang einer Kante des Teils verteilten Spalten (111) versehen ist, wobei jede der Spalten mit einer Spalte (121) eines Querteils (12) zusammenwirkt, und wobei jedes Querteil (12) mit einer Vielzahl von entlang einer Kante des Teils verteilten Spalten (121) versehen ist, wobei jede der Spalten mit einer Spalte (111) eines Längsteils (11) zusammenwirkt.

5. Trennschale nach Anspruch 3 oder Anspruch 4, wobei die Mittelebenen der Querteile (12) im Wesentlichen parallel sind und die Mittelebenen der Längsteile (11) im Wesentlichen senkrecht zu den Mittelebenen der Querteile sind.

6. Trennschale nach einem der Ansprüche 3 bis 5, wobei jede Spalte (111, 121) eine Tiefe beinhaltet, die im Wesentlichen der Hälfte einer lokalen Breite des Teils (11, 12) entspricht, das die Spalte aufweist.

7. Trennschale nach einem der Ansprüche 3 bis 6, wobei jede Verbindung zwischen einem Längsteil (11) und einem Querteil (12) vom T-förmigen Typ aus Halbholz ist.

8. Trennschale nach einem der Ansprüche 3 bis 7, wobei die Längs- (11) und Querteile (12) Plattenelemente sind.

9. Trennschale nach einem der Ansprüche 3 bis 8, wobei das Gerüst (10) ferner Hilfsflachteile (13) beliebiger Form sowie flache Aufhänge- und Befestigungsteile (14a, 14b) umfasst.

10. Trennschale nach Anspruch 9, wobei die Hilfsteile (13) und die Aufhänge- und Befestigungsteile (14a, 14b) mit Mitteln wie Zapfen (141) und Mulden (112, 131) an dem Rest des Gerüsts (10) befestigt sind.

11. Trennschale nach einem der Ansprüche 3 bis 10, wobei die Längs- (11) und Querteile (12) metallisch sind.

## Claims

1. A method for manufacturing an aircraft seat partition shell (100),
said shell comprising a framework (10) and a casing shell (20) surrounding said framework, said framework comprising longitudinal parts (11) and transverse parts (12) spaced apart and assembled therebetween, said parts having varied shapes and dimensions so as to reproduce a three-dimensional general shape of the partition shell, the longitudinal and transverse parts being planar and each comprising at least one end (111, 121), said method being **characterized in that** it comprises:
- a step of defining the longitudinal (11) and transverse (12) parts according to a shape of the partition shell (100);
- a step of cutting out said defined parts in planar panels;
- a step of assembling the cut-out parts by their butt joints (111, 121) to rebuild the shape of the partition shell; and
- a step of fastening said casing shell (20) to said framework (10).

2. The method according to claim 1, further comprising a step of rigidly fastening the assembly obtained by welding, gluing, clipping together or any other conventional technique.

3. An aircraft seat partition shell (100), comprising a frame (10) and a casing shell (20) surrounding said frame, **characterized in that** it is obtained by a manufacturing method according to claim 1 or claim 2.

4. The partition shell according to claim 3, wherein each longitudinal part (11) is provided with a plurality of butt joints (111) distributed along an edge of said part, each of said butt joints cooperating with a butt joint (121) of a transverse part (12), and wherein each transverse part (12) is provided with a plurality of butt joints (121) distributed along an edge of said part, each of said butt joints cooperating with a butt joint (111) of a longitudinal part (11).

5. The partition shell according to claim 3 or claim 4, wherein the mid-planes of the transverse parts (12) are substantially parallel and the mid-planes of the longitudinal parts (11) are substantially perpendicular to the mid-planes of said transverse parts.

6. The partition shell according to any of claims 3 to 5, wherein each butt joint (111, 121) has a depth substantially equal to half a local width of the part (11, 12) comprising said butt joint.

7. The partition shell according to any of claims 3 to 6, wherein each assembly between a longitudinal part (11) and a transverse part (12) is of the T-shaped half-lap type.

8. The partition shell according to any of claims 3 to 7, wherein the longitudinal (11) and transverse (12) parts are panel elements.

9. The partition shell according to any of claims 3 to 8, wherein the framework (10) further comprises auxiliary planar parts (13) of any shapes as well as planar connection and fastening parts (14a, 14b).

10. The partition shell according to claim 9, wherein the auxiliary parts (13) and the connection and fastening parts (14a, 14b) are fastened to the rest of the framework (10) by means such as tenons (141) and mortises (112, 131).

11. The partition shell according to any of claims 3 to 10, wherein the longitudinal (11) and transverse (12) parts are metallic.
